(19) **Europäisches Patentamt**

**European Patent Office**

**Office européen des brevets**

(11) **EP 0 754 889 B1**

(12) **FASCICULE DE BREVET EUROPEEN**

(45) Date de publication et mention
de la délivrance du brevet:
**23.08.2000 Bulletin 2000/34**

(51) Int Cl.⁷: **F16H 61/06**
// (F16H59/24, 59:38)

(21) Numéro de dépôt: **96401510.1**

(22) Date de dépôt: **09.07.1996**

(54) **Procédé de contrôle du déroulement des changements de rapports montants sur une transmission automatique**

Verfahren zur Steuerung des Schaltablaufs beim Heraufschalten in einem Automatikgetriebe

Method for controlling upshift gearchanges in an automatic transmission

(84) Etats contractants désignés:
**BE DE ES GB IT**

(30) Priorité: **21.07.1995 FR 9508867**

(43) Date de publication de la demande:
**22.01.1997 Bulletin 1997/04**

(73) Titulaire: **RENAULT**
**92109 Boulogne-Billancourt (FR)**

(72) Inventeurs:
• **Constancis, Pierre**
**78300 Poissy (FR)**
• **Renault, Dominique**
**92500 Rueil Malmaison (FR)**

(56) Documents cités:
**EP-A- 0 475 585      EP-A- 0 476 832**
**EP-A- 0 524 066      DE-A- 4 114 382**
**GB-A- 2 259 148      US-A- 5 134 904**

EP 0 754 889 B1

## Description

La présente invention se rapporte à la commande des transmissions automatiques. Plus précisément, elle a pour objet un procédé de contrôle du circuit hydraulique d'une transmission automatique, destiné à optimiser le déroulement des changements de rapports montants, sur celle-ci. Ce procédé est applicable à toute transmission automatique munie d'un train épicycloïdal associé à des récepteurs hydrauliques, embrayages ou freins, dont le serrage ou le relâchement permet d'engager les différents rapports.

Sur la plupart des transmissions automatiques du type précité, chaque changement de rapport est obtenu par la vidange d'un premier récepteur et par le remplissage d'un second récepteur. L'optimisation des changements de rapports nécessite dans ce cas, de maîtriser avec la meilleure précision possible le déclenchement de la vidange du récepteur qui est relâché afin d'éviter tout à-coup dans la transmission, lors du passage. La surveillance du régime de la turbine est un moyen particulièrement approprié, pour détecter l'instant idéal auquel la vidange du premier récepteur doit être déclenchée.

On admet généralement que cet instant idéal coïncide avec le point de rupture de pente de la courbe du régime turbine, précédant immédiatement son passage par un maximum.

Pour surveiller l'évolution du régime de la turbine, il est connu d'implanter un capteur, par exemple à réluctance variable, à proximité d'une cible tournante munie de dents, solidaire de l'arbre de la turbine.

Par la publication EP 0476 832, on connaît un système de contrôle de la pression hydraulique du récepteur qui est serré lors d'un passage montant, reposant sur l'observation du régime de la turbine. Selon ce document, une mesure du temps séparant le passage de la dérivée du régime turbine, en dessous d'un seuil préétabli, du passage du régime turbine proprement dit en dessous d'un autre seuil préétabli, est exploitée pour moduler la pression de remplissage du récepteur en question.

Les dispositions décrites dans cette publication permettent de réduire utilement les à-coups d'une transmission automatique lors des passages montants, grâce au contrôle de la pression de remplissage du récepteur serré lors de chaque passage, à partir d'informations relatives au régime de la turbine. En revanche, ces dispositions n'assurent aucun contrôle de la pression hydraulique du récepteur qui est relâché. Par ailleurs, elles supposent que l'évolution du régime turbine au cours d'un passage montant soit suffisamment régulière pour que l'exploitation des courbes correspondantes s'effectue sans risque d'erreur sur l'interprétation de leurs changements de pente. Enfin si, pour une raison quelconque, le régime turbine subit, durant la phase transitoire de passage, une chute et une remontée non prévues par le système, la comparaison du régime turbine et de sa dérivée avec des valeurs fixes conduit à coup sûr à des manoeuvres anticipées dans la commande d'alimentation des récepteurs hydrauliques.

La présente invention vise à supprimer les inconvénients des dispositifs de surveillance du régime turbine connus.

Elle concerne un procédé de contrôle du déroulement des changements de rapports montants sur une transmission automatique comportant un convertisseur de couple associé à un train épicycloïdal manoeuvré par un ensemble de récepteurs hydrauliques de façon telle que chaque changement de rapport soit obtenu en mettant sous pression un premier récepteur et en déclenchant la vidange d'un second récepteur lors du passage du régime turbine $\omega$t par un point de déflexion, postérieur au top de début de passage, et antérieur à son maximum $\omega$tmax. Ce procédé est caractérisé en ce que ledit point de déflexion est détecté en comparant une variable $\Delta$d'f liée au régime turbine, avec un seuil S, calculé lors de chaque changement de rapport.

Selon un mode de réalisation préférentiel de l'invention, la variable $\Delta$d'f correspond à la variation du temps $\Delta$d séparant le passage de deux dents consécutives d'une cible dentée solidaire de l'arbre de turbine du convertisseur, devant un capteur fixe, sur un tour de ladite cible.

Conformément à l'invention, le seuil S est recalculé après chaque top de début de passage.

D'autres caractéristiques et avantages de l'invention apparaîtront à la lecture de la description suivante d'un mode de réalisation particulier de celle-ci, en liaison avec les dessins annexés, sur lesquels :

- la figure 1 présente sommairement un dispositif permettant d'obtenir l'information régime turbine,

- la figure 2 illustre les phases transitoires d'un changement de rapport montant.

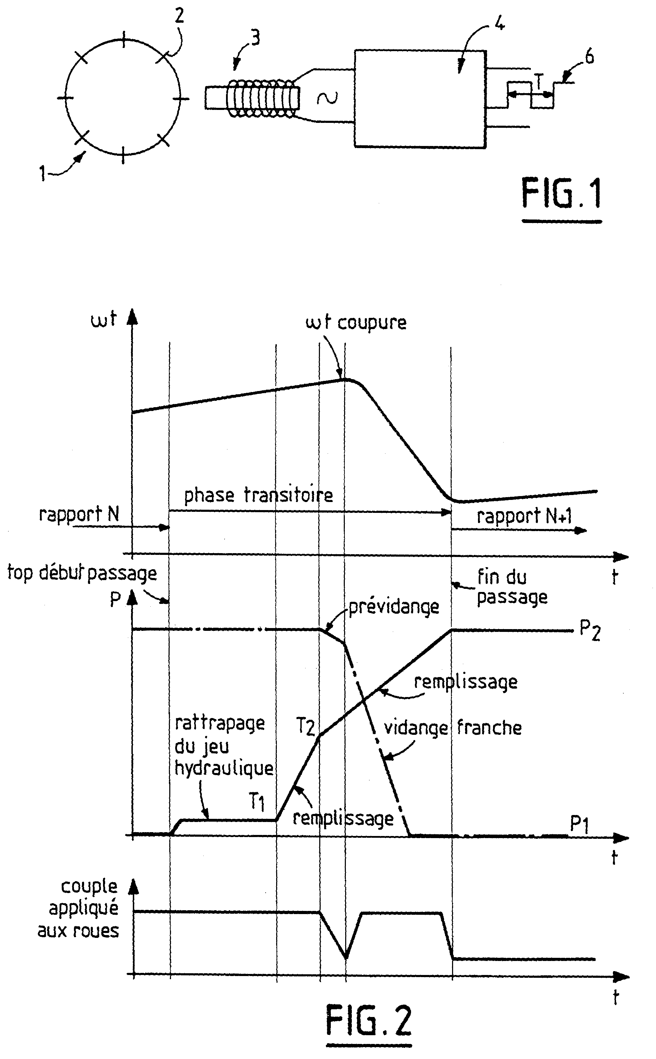

La figure 1 fait apparaître de façon schématique une cible à huit dents 2, telle qu'une cible de mesure du régime turbine $\omega$t, d'une transmission automatique, solidaire en rotation de l'arbre de turbine (non représenté) de celle-ci, et placée à proximité d'un capteur fixe 3, par exemple à réluctance variable, associé à une unité de mise en forme 4 délivrant un signal de sortie 6 en forme de créneaux, de période T. Un tel capteur permet, de façon classique, de calculer le régime turbine $\omega_t$ de la transmission à partir de la mesure de T. $\Delta$d, image de T, intervalle de temps séparant le passage de deux dents consécutives 2 devant la cible, est lié au régime $\omega_t$.

Les courbes de la figure 2 illustrent respectivement l'évolution du régime turbine $\omega_t$, de la pression $P_1$ dans le récepteur qui est relâché, de la pression $P_2$ dans le récepteur qui est rempli, et du couple transmis aux roues motrices d'un véhicule, au cours d'un passage montant géré de façon idéale. Selon ces schémas, à partir d'un "top" de début de passage, la première étape de la phase transitoire est consacrée au rattrapage du jeu hydraulique dans le nouveau récepteur. Cette première étape est suivie du remplissage proprement dit en deux temps, conduisant à la fin de la phase transitoire à obtenir dans le nouveau récepteur une pression P2 égale à la pression initiale P1 du récepteur qui a été libéré. La prévidange du récepteur libéré est normalement déclenchée lors du changement de pente de P2. Comme indiqué précédemment, il est nécessaire de mesurer avec précision $\omega t$ pour déclencher sa vidange franche au meilleur moment, c'est-à-dire lors de la baisse d'accélération de la turbine précédant immédiatement le passage du régime $\omega_t$ par un maximum. On sait en effet que ce point, appelé point de coupure, correspond à une réduction momentanée du couple à sa valeur sur le rapport N+1. Par suite, si la détection s'effectue avec du retard, le changement de rapport sera accompagné d'un choc dans la transmission, ayant pour conséquence une sensation désagréable pour les passagers. Si en revanche, le premier récepteur est libéré prématurément, la transmission, momentanément hors contrôle, aura tendance à s'emballer.

Comme indiqué ci-dessus, l'invention propose de surveiller le régime turbine à partir des mesures directes de $\Delta d$, intervalle de temps séparant le passage de deux dents consécutives 2, devant le capteur 3, et du calcul de la pseudo-dérivée $\Delta d'$, proportionnelle et de signe inverse à la dérivée $\omega t'$ du régime turbine, donc exploitable dans les mêmes conditions que celle-ci pour détecter le point de coupure $\omega t$.

Pour simplifier les calculs, la pseudo-dérivée $\Delta d'$ ne sera pas divisée par le temps $\Delta t$. Son calcul peut ainsi se réduire à une simple soustraction entre la durée $\Delta d$ à l'instant t et celle du tour précédent, soit huit passages de dents plus tôt, dans le cas d'une cible à huit dents. L'invention prévoit par ailleurs de filtrer la valeur de la pseudo-dérivée $\Delta d'$, en appliquant une méthode de filtrage éliminant les effets parasites de la cible et favorisant un compromis idéal entre le lissage de la courbe de $\Delta d'$, le retard de la détection du point de coupure, et la rapidité d'exécution de l'ordre de vidange.

Conformément à l'invention, le point de coupure $\omega t$ idéal est détecté en comparant la pseudo-dérivée filtrée $\Delta d'f$ à un seuil variable S, adapté à chaque changement de rapport. Le seuil S est calculé à l'occasion de chaque passage de vitesses en fonction d'échantillons de pseudo-dérivée pris entre le top de début de passage t et une date t+D postérieure à t, mais précédant toutefois le point de coupure $\omega t$ recherché. La durée D, appelée durée de scrutation, est déterminée expérimentalement, et dépend notamment de la charge du moteur et du rapport engagé. Si la charge du moteur est évaluée à partir de la position de la pédale d'accélération, la course de celle-ci pourra être divisée en un nombre quelconque de tranches, ou secteurs, par exemple huit, en vue de moduler la durée D en fonction de la position de la pédale dans l'une ou l'autre de ces tranches, selon des méthodes de calcul usuelles, telles que l'interpolation linéaire.

Après le top du début de passage, les valeurs maximum (Max) et minimum (Min) de la pseudo-dérivée filtrée $\Delta d'f$, relevées au cours de la durée D, sont exploitées pour déterminer le seuil S appliqué lors du passage, selon la formule :

$$S = (Max - Min). \tau + Max$$

où $\tau$ est un taux déterminé expérimentalement, correspondant au rapport engagé.

La durée D peut également être calculée selon d'autres méthodes, par exemple à partir des temporisations T1 et T2, imposées pour le rattrapage du jeu hydraulique du récepteur serré lors du passage, et pour sa première phase de remplissage.

En conclusion, le procédé de contrôle proposé par l'invention permet de minimiser le retard entre le point de coupure idéal et sa détection. La prise en compte d'une pseudo-dérivée des intervalles de comptage, (dérivée non rapportée à l'unité de temps), permet notamment par un filtrage adapté, de réduire les imprécisions de mesure dues à la cible elle-même, et de simplifier les calculs nécessaires à la détection du point de déflexion du régime turbine. Enfin, la simplification obtenue autorise une fréquence de calcul plus élevée, et un traitement plus rapproché de l'information, facilitant la rapidité de la détection.

## Revendications

**1.** Procédé de contrôle du déroulement des changements de rapports montants sur une transmission automatique comportant un convertisseur de couple associé à un train épicycloïdal manœuvré par un ensemble de récepteurs hydrauliques de façon telle que chaque changement de rapport soit obtenu en mettant sous pression un premier récepteur et en déclenchant la vidange d'un second récepteur lors du passage du régime turbine ($\omega t$) par un point de déflexion ($\omega t$ coupure) postérieur au top de début de passage et antérieur à son maximum, caractérisé en ce que ledit point de déflexion est détecté en comparant avec un seuil S, calculé lors de chaque changement de rapport montant, la variation $\Delta d'f$ du temps $\Delta d$ séparant le passage de deux dents (2) consécutives d'une cible dentée (1) solidaire de l'arbre de turbine du convertisseur, devant un capteur fixe (3).

**2.** Procédé de contrôle selon la revendication 1, caractérisé en ce que la comparaison en question s'effectue sur un tour de la cible (1).

**3.** Procédé de contrôle selon la revendication 1 ou 2, caractérisé en ce que le seuil S est recalculé après chaque top de début de passage.

4. Procédé de contrôle selon la revendication 3, caractérisé en ce que l'on relève la valeur maximale, Max, et la valeur minimale, Min, de la variable Δd'f, sur une durée de scrutation D.

5. Procédé de contrôle selon la revendication 4, caractérisé en ce que la durée D dépend de la charge du moteur et de chaque rapport engagé.

6. Procédé de contrôle selon la revendication 4 caractérisé en ce que la durée de contrôle D dépend de temporisations imposées pour le remplissage et la vidange des récepteurs hydrauliques.

7. Procédé de contrôle selon la revendication 4, caractérisé en ce que le seuil S est calculé de la manière suivante :

$$S = (Max - Min)\tau + Max,$$

dans laquelle $\tau$ dépend uniquement du rapport engagé.

8. Procédé de contrôle selon l'une des revendications 4 à 7, caractérisé en ce que la durée de scrutation D est modulée en fonction de la position de la pédale d'accélération.

**Patentansprüche**

1. Verfahren zur Steuerung des Ablaufs von Hochschaltungen eines automatischen Getriebes, das einen Drehmomentwandler aufweist, der einem Planetentrieb zugeordnet ist, welcher durch hydraulische Schaltventile derart betätigbar ist, dass die Gangwechsel durchgeführt werden, indem ein erstes Schaltventil mit Druck beaufschlagt wird und ein zweites Schaltventil entleert wird beim Erreichen der Turbinendrehzahl (ωt) eines Absenkpunktes (ωt coupure) nach dem oberen Einleitungspunkt des Gangswechsels und vor deren Maximum, dadurch gekennzeichnet, dass der Absenkpunkt festgestellt wird durch Vergleich der Variation Δd'f der Zeit Δd, die den Vorbeilauf zweier aufeinanderfolgender Zähne (2) einer Zahnplatte (1), welche mit der Welle der Turbine des Wandlers fest verbunden ist an einem feststehendem Fühler (3) trennt, mit einem während eines jeden Hochschaltens berechneten Schwellwert S.

2. Verfahren nach Anspruch 1, dadurch gekennzeichnet, dass dieser Vergleich während einer Umdrehung der Zahnplatte (1) durchgeführt wird.

3. Verfahren nach Anspruch 1 oder 2, dadurch gekennzeichnet, dass die Schwelle S neu berechnet wird nach jedem oberen Einleitungspunkt eines Gangwechsels.

4. Verfahren nach Anspruch 3, dadurch gekennzeichnet, dass der Maximalwert Max und der Minimalwert Min der Variablen Δd'f während einer Abfragedauer D ermittelt werden.

5. Verfahren nach Anspruch 4, dadurch gekennzeichnet, dass die Dauer D von der Motorlast und von jedem eingelegten Gang abhängt.

6. Verfahren nach Anspruch 4, dadurch gekennzeichnet, dass die Steuerdauer D von den für die Füllung und die Entleerung der hydraulischen Schaltventile benötigten Zeiten abhängt.

7. Verfahren nach Anspruch 4, dadurch gekennzeichnet, dass der Schwellwert S wie folgt berechnet wird:

$$S = (Max - Min)\tau + Max,$$

wobei $\tau$ ausschließlich vom eingelegten Gang abhängt.

8. Verfahren nach einem der Ansprüche 4 bis 7, dadurch gekennzeichnet, dass die Abfragedauer D als Funktion der Position des Beschleunigungspedals moduliert wird.

**Claims**

1. Method of controlling the progress of upward ratio changing in an automatic transmission, comprising a torque converter connected to a planetary transmission manoeuvred by a set of hydraulic receptors such that each change is obtained by pressurising a first receptor and initiating the drainage of a second receptor during the passing of the turbine speed (ωt) of a deviation point (ωt cut-off) posterior to the cue for the start of changing and anterior to its maximum value, characterised in that said deviation point is detected by comparing with a threshold S, calculated during each upward change, the variation Δd'f of the time Δd separating the passing of two consecutive teeth (2) of a toothed target (1) integral with the turbine shaft of the converter, in front of a fixed sensor (3).

2. Method of control according to claim 1, characterised in that the comparison in question is done over one rotation of the target (1).

3. Method of control according to claim 1 or 2, characterised in that the threshold S is recalculated after each cue at the start of changing.

4. Method of control according to claim 3, characterised in that the maximum value Max, and the minimum value Min of the variable $\Delta$d'f are determined over a duration of polling D.

5. Method of control according to claim 4, characterised in that the duration D depends on the loading of the engine and each ratio engaged.

6. Method of control according to claim 4, characterised in that the control duration D depends on delays imposed for the filling and the drainage of the hydraulic receptors.

7. Method of control according to claim 4, characterised in that the threshold S is calculated in the following manner:

$$S = (Max - Min)\tau + Max,$$

in which $\tau$ depends solely on the ratio engaged.

8. Method of control according to one of claims 4 to 7, characterised in that the polling duration D is modulated as a function of the position of the accelerator pedal.

FIG.1

FIG.2

6